# EUROPEAN PATENT SPECIFICATION

(11) **EP 0 730 893 B1**
(45) Date of publication and mention of the grant of the patent: **08.12.1999**
(21) Application number: 95301461.0
(22) Date of filing: 07.03.1995
(51) Int. Cl.: B01D 9/04

(54) **Freeze crystallization concentration methods and apparatus**
Eindickungsverfahren und Vorrichtung durch Ausfrieren
Procédé et appareil de concentration par congélation

(43) Date of publication of application: 11.09.1996
(73) Proprietor: WATERWORKS INTERNATIONAL, INC., Maynard, Massachusetts 01754 (US)
(72) Inventor: Keus, Arie, Lynn, Massachusetts 01902 (US)
(74) Representative: Bayliss, Geoffrey Cyril

(56) References cited:
- CH-A- 150 902
- US-A- 3 049 889
- US-A- 3 885 399
- US-A- 4 314 455
- US-A- 4 551 159

## Description

The invention relates generally to freeze crystallization concentration systems, which are used to separate water from a solution in which solids are dissolved or suspended. More particularly, the invention relates to improved freeze crystallization apparatus and methods utilizing a single pass or one-step crystallization process that is more efficient and economical than existing systems.

The use of freeze-crystallization concentration systems to separate liquid feed streams into a more purified liquid and a concentrate is known. These systems have many uses, including conversion of a contaminated waste water stream into fresh water and concentrate, desalination of sea water, concentration of solutions or suspensions containing food such as orange juice or coffee, and separation from solution of chemicals having different freezing points. In some of these cases, the desired product is purified water, which can be obtained by melting the ice formed in such systems, but in other cases the desired product is the concentrate.

Freeze-crystallization concentration processes operate by taking advantage of the scientific principle that ice crystals, as they freeze, exclude dissolved impurities, including organics, inorganics and volatiles. Thus, the resulting ice crystals consist of purified water.

Generally, freeze-crystallization systems include at least one freeze-crystallizer to form ice crystals and a concentrate, and at least one wash column to separate ice from concentrate and to wash the surface of the ice crystals. Systems which include only one freeze-crystallizer and one wash column are referred to as single stage or one-step systems.

Systems have been employed using two freeze-crystallizers and two wash columns, which are referred to as two-stage systems. One example of a two-stage freeze-crystallization system is described in U.S. Pat. No. 3,885,399 to Robert J. Campbell. The system described in this patent recycles concentrate from the first-stage wash column and uses the recycled concentrate as wash water in the second-stage wash column. Another two-stage freeze crystallization system is described in U.S. Pat. No. 4,091,635 to Abraham Ogman. This patent employs two separate crystallizers, both of which cool the incoming feed stream by direct injection of immiscible secondary refrigerants into the feed. The pressure in the crystallizer is maintained such that the refrigerant can vaporize, withdrawing sufficient heat from the input feed to cause ice crystal formation.

One of the major problems in prior freeze concentration systems has been removing the ice crystals from the concentrate. This problem intensifies with increasing concentration and viscosity. Many methods have been tried or proposed to overcome this problem, but have met with dubious success. For instance, in most cases, use of a one-step system in which the feed stream passes through the freeze-crystallizer only once is insufficient to produce the desired concentration. Thus, it has been proposed to use a second freeze-crystallizer in a two-stage system or to send some of the concentrate back to the first freeze-crystallizer without any ice crystals in the feed stream.

One of the major problems with the two-stage solution lies in duplication of expensive equipment required in two-stages systems, such as wash columns, filters or centrifuges, and refrigeration systems, which results in heat loss and increases the energy cost per pound of water removed. Another problem with two-stage systems is their limited ability to treat highly contaminated feed streams. One reason for this is that when the concentration of the feed stream is relatively high, the ice crystals produced are relatively small and therefore difficult to wash. (The rate of ice crystal growth is inversely proportional to the concentration of the surrounding liquid.) Solutions to this problem, such as diluting the feed, increasing retention time in wash columns, building larger wash columns, providing finer filters and better screens in centrifuges, also result in excessive energy consumption or increased capital costs.

Another significant problem in freeze crystallization systems of the either one- or two-stage variety has been the costly and inefficient design of the freeze-crystallizer apparatus itself. Indirect freeze crystallizers in which the coolant is maintained separate from the feed have been built and patented in many forms. Most common have been the scraped-surface heat exchangers or falling-film heat exchangers, which typically use either rotating motors or hydraulic pressure of the liquid as the driving force. All of these designs have severe limitations including a limitation of the amount of ice crystals produced in a single pass, which at its best has been an ice fraction of about 40%. Rotating scraper crystallizers must be very large by design and hydraulically-driven crystallizers, including the falling film variety, are constrained to particular spatial orientations. The falling film type must operate in a vertical position with the feed stream entering at the top; it is also sensitive to the viscosity of the liquid it processes. Hydraulically-driven shell and tube crystallizers must be operated in a horizontal position. Shell and tube freeze-crystallizers that cool the feed stream by direct injection of the refrigerant into the feed, such as disclosed in the above-mentioned U.S. Pat. No. 4,091,635, suffer from several additional drawbacks. The use of the direct refrigerant, which creates increased pressure in the shell that fluctuates depending on whether the device is being operated, requires a thick tube wall design, with the attendant low heat transfer efficiency and low density of tubes per area, resulting in a large overall size.

As a result of the foregoing problems, there are very few freeze concentration systems that can compete with other separation processes known in the industry, such as distillation, electro-dialysis or reverse osmosis, which are commonly known but expensive methods for removing water from a solution containing dissolved solids like salts and other materials. Many projects in which freeze concentration systems could have been used successfully have failed because of the above-noted problems, which have restricted the use of such freezing processes and prevented their commercial application.

US-A-3049889 discloses a system for rendering a brine solution potable comprising the steps of passing a brine solution to a freezer vessel, evacuating the freezer vessel to a pressure which causes flash freezing of the brine solution thereby producing a mixture of ice and brine in the freezer vessel, gravitationally partially separating the ice from the mixture, passing the partially separated ice to a centrifugal separator and washer, condensing relatively pure water from water vapor removed from the freezer vessel upon evacuation thereof, passing at least a portion of the condensed water vapor over the ice in the centrifugal separator while simultaneously rotating the centrifugal separator to wash the separate ice therein from brine remaining on the surface and in the interstices of the ice, collecting the washed and separated ice and melting the collected ice to produce potable water.

This invention provides a method of separating a liquid feed stream into a concentrate of the liquid and a more purified form using an apparatus including a freeze crystallizer, a first conduit, a separator, and a second conduit from the crystallizer to the separator, characterised in that said method includes the steps of directing a liquid feed stream into a wash column, conducting the feed stream via the first conduit from the wash column to the freeze crystallizer such that the feed stream passes through the crystallizer in a single pass, creating crystals from the feed stream on an interior surface of the crystallizer, simultaneously removing the crystals from the interior surface of the crystallizer, combining the crystals with the feed stream in the crystallizer to produce a slurry of crystals and more concentrated liquid, and pumping the slurry out of the crystallizer, conducting the slurry via the second conduit from the crystallizer to the separator such that the slurry passes through the separator in a single pass, and separating the crystals and concentrated liquid from the slurry in the separator using a density-based separation method.

Thus the invention solves the above problems by providing a more efficient, cost-effective and reliable apparatus and method for separating water from a solution containing dissolved solids by freeze crystallization than heretofore feasible. More particularly, this is accomplished by the use of a single-stage freeze crystallization process in which an improved freeze-crystallization apparatus for creating a slurry of ice crystals and liquid concentrate, and an improved separator for removing the ice crystals from the concentrate are employed.

The freeze-crystallization apparatus creates ice crystals at a minimum cost and maximum efficiency by combining the required pumping and scraping forces into a single drive. The freeze-crystallization apparatus uses an indirect cooling process with a secondary cooling media, which results in lower pressure within the shell, closely-spaced tubes, thinner tubing walls for more efficient heat transfer, and can operate in any position or orientation. This is especially important when the apparatus is used on a seafaring vessel. The freeze-crystallization apparatus of the invention produces a high percentage of ice crystals on a single pass, such as up to abut 50% or more ice fraction, thereby eliminating the need for recirculation.

The invention also provides an apparatus for separating a liquid feed stream into a concentrate of the liquid and a more purification form, the apparatus including a freeze crystallizer for receiving a liquid feed stream and producing a slurry of crystals and a more concentrated liquid, a separator for receiving the slurry from the crystallizer and separating the crystals and concentrate based solely on centrifugal action, the liquid feed stream being conducted via a first conduit to a wash column and from the wash column to the freeze crystallizer via a second conduit, wherein the crystallizer has an interior surface upon which crystals form, a scraper mechanism for removing the crystals from the interior surface and for combining the crystals with said feed stream to produce a slurry, pump for conducting the slurry out of the crystallizer, and a single drive mechanism for mechanically driving both the scraper mechanism and the pump.

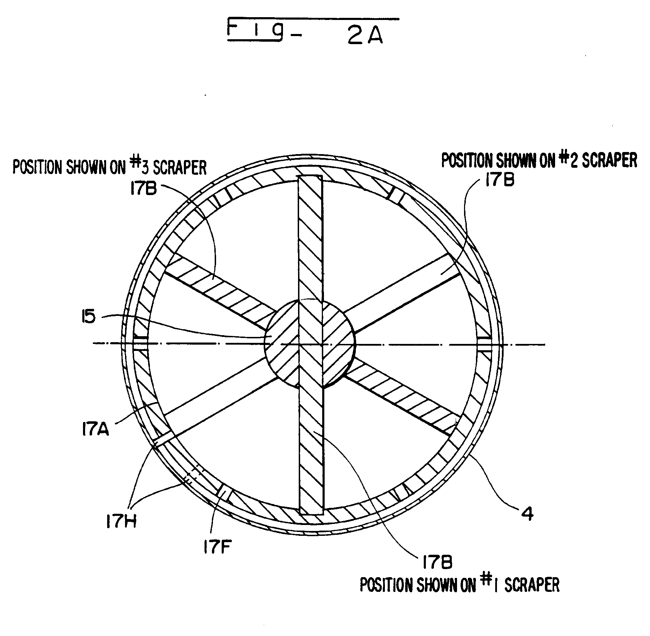

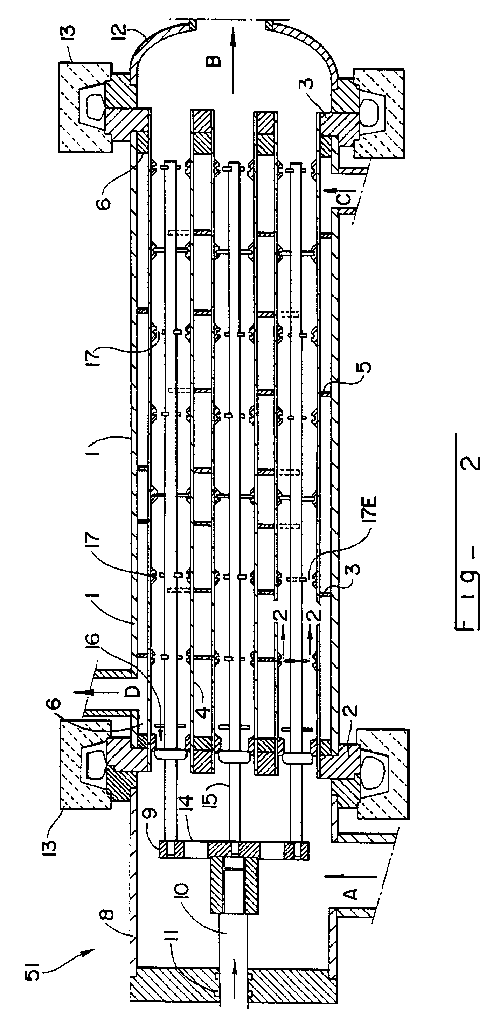

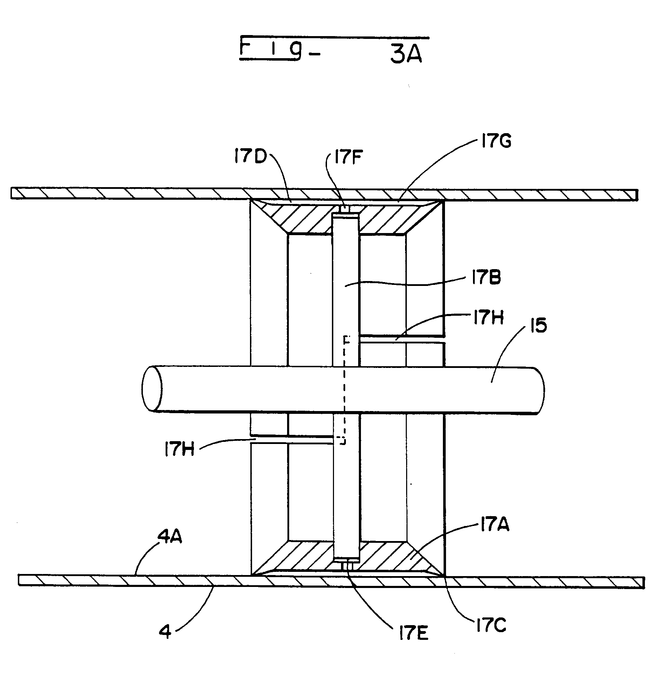

The ice separation apparatus of the invention solves the ice removal problem by extracting ice crystals from the slurry at a high percentage, such as up to about 95% separation, without the use of costly screens or filters. This is accomplished with a screen-less centrifuge that removes the concentrate without any exposure to air. (Most concentrates are subject to foaming in the presence of air, which typically requires additional apparatus and expense to reduce, as is evident, for example, from Figs. 2-3 of U.S. Pat. No. 4,036,619 to Ganiaris.) The ice crystals are removed by a scraping mechanism, such as an auger that rotates inside a rotatable drum forming the centrifuge, but at a slightly different speed.

The freeze-crystallization and ice separation apparatus of the invention obviously may be used separately or in combination with other freeze concentration apparatus or processes; however, the maximum benefits of the invention may be obtained when they are used in conjunction in a single pass process as described herein.

An input feed stream, such as salt water or fruit juice, passes through a wash column of any conventional, known design where the feed stream is pre-cooled by the ice crystals from the separator entering the wash column near the bottom. The feed stream is enriched in concentration by the washed off concentrate that enters the feed with the ice crystals, and is conducted to the chamber of the freeze-crystallization apparatus where it is pumped through one of several tubes. The tubes of the crystalizer are arranged as a bundle within a shell. The feed stream is pre-cooled but ice-free at this point. A secondary cooling media (brine), cooled by a refrigerant, flows around the tubes, cooling the tube surfaces such that ice crystals form within the feed stream are pumped through the tubes. As the feed is pumped through the tubes, scrapers attached to the pumping mechanism simultaneously scrape the ice from the inner tube walls to maintain a flow of slurry of ice crystals and concentrate.

The slurry is subsequently passed into the ice separation apparatus of the invention, which is a rotating drum. The rotation of the drum acts as a centrifuge, separating the ice crystals from the higher-density concentrate that is forced to the outside of the drum. An ice scraping mechanism, such as an auger, is disposed within the drum and may be aligned for rotation along its longitudinal axis to scrape the ice crystals. separating them from the concentrate. The ice crystals removed by the augur are conducted through the wash column, counter current upwards to the feed, and are prevented from conglomerating by pin mixing rods until the ice crystals reach the level where the feed stream enters the column. The ice crystals will then form a pack which will rise above the liquid level and continue to rise until it reaches the top of the column to be removed by a conventional scraper. During the rise, water created from molten ice will be sprinkled on top of the ice pack and drain into the liquid zone, washing off any remaining concentrate. The ice crystals may then be melted to pure water.

The following is a description of some specific embodiments of the invention, reference being made to the accompanying drawings, in which:
FIG. 1 is a schematic flow diagram illustrating the freeze-crystallization concentration process of the invention.
FIG. 2 is a longitudinal, partial sectional view of a freeze-crystallization apparatus constructed according to the principles of the invention (hereinafter referred to as the "crystallizer.")
FIG. 2A is a sectional view of a scraper taken along lines 2-2 of FIG. 2.
FIG. 3-6 are sectional views of the pump and scraper mechanism of the crystallizer of FIG. 2, each in a different event changing operating position.
FIG. 3A is an enlarged sectional view of the ice scrapers shown in FIG. 3.
FIG. 7 is a longitudinal, partial sectional view of the ice separation apparatus of the invention (hereinafter referred to as "the separator"), illustrating the centrifugal separation chamber, auger, concentrate pump, drive mechanism, stationary members, and concentrate and ice crystal slurry feed port.

For purposes of the description contained herein, the following terms are defined as follows:

Feed Stream: This is the input to the system and may be contaminated water, sea water, brackish water, industrial waste water, chemical process streams containing salts or other chemicals in suspension or solution, suspensions or solutions of food such as orange juice or coffee, etc. Generally, the feed stream will be an aqueous solution, but the term (and the invention) is not limited to aqueous solutions and also includes non-aqueous solutions containing solvents that can be freeze-crystallized.

Concentrate: This is the liquid portion of slurry produced by a freeze-crystallizer, and may consist of brine, liquor of industrial waste, food solutions or suspensions, or any other suitable solution of suspension containing dissolved solute or dispersed particles.

Dilute or Concentrated: These are relative terms which refer to the weight percentage of impurities, contaminates, salts, food or other dissolved solutes in a feed stream or concentrate.

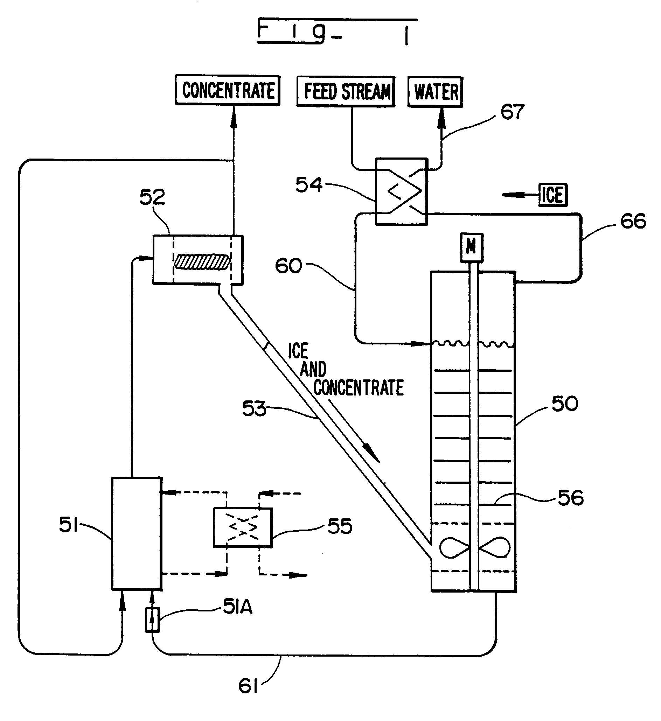

The single-stage freeze crystallization concentration system of the invention is shown in schematic form in FIG. 1. Ancillary equipment that may be necessary for operation of the system but not needed to explain the principles of the invention, such as pumps, valves, and the like, has not been shown nor described herein for purposes of clarity in illustrating the invention. It will be recognized by those skilled in the art that such ancillary equipment would, of course, be used in combination with the apparatus described and claimed herein.

As is typical of freeze crystallization concentration processes, the feed stream to be concentrated (which may also be referred to herein as the feed) is conducted via a line **60** to a heat exchanger or other conventional cooling apparatus **54** where it is pre-cooled, but should be ice-free. From heat exchanger **54**, line **60** conducts the feed stream to the inlet of a wash column **50**, which may be of any conventional design known in the art. The feed is conducted through the wash column where it is mixed with a slurry of predominantly ice crystals and a small amount of concentrate, as explained in more detail subsequently.

Line **61** conducts the enriched feed stream from the wash column **50** to the crystallizer **51** of the invention. The feed will be further cooled in the wash column but should still be ice-free prior to entering the crystallizer. A small amount of ice in the feed stream at this point would be operable, but would interfere with the system's efficiency. Once in the crystallizer **51** the feed is further cooled by any conventional and well-known refrigeration means **55**, which may comprise a coolant such as brine circulated between a series of bundled tubes disposed within the crystallizer shell as described in more detail subsequently. Pure ice crystals form on the inner walls of the tubes, and are scraped off to create a slurry of ice crystals and concentrate. The partially-crystallized slurry, which may have an ice fraction of up to 50% or higher when treated in the crystallizer of the invention, is then conducted to the separator **52** of the invention, where centrifugal action separates the ice crystals from the higher-density concentrate. The concentrate or a portion thereof may be recycled back to the crystallizer or completely removed from the system at this point. The ice crystals, which typically contain only a small percentage, e.g., 5%, of concentrate after a single pass through the separator of the invention, are conducted along line **53** with the help of an auger to the bottom of the wash column **50**.

The ice crystals enter near the bottom of the wash column **50** while the cooled feed stream enters through line **60**, closer to the top of the wash column, at the liquid level. The slurry of ice crystals and the feed stream is mixed in the wash column by pin mixing rods **56**, which allow the less-dense ice crystals to float upward and grow by contact with feed stream. The feed stream mixed with the higher-density concentrate settles toward the bottom, where it is conducted through line **61** to the inlet valve of crystallizer **51**. The ice in the wash column, rising above the liquid level, is washed and scraped from the top of the wash column by conventional means, and conducted from the wash column through line **66**, after which it is melted to produce purified water. The heat exchanger **54** uses the energy of the melting ice to pre-cool the incoming feed stream.

The crystallizer **51** of the invention is essentially a scraped-surface heat exchanger that produces, removes, and pumps ice crystals in a more economical and energy efficient manner than heretofore feasible. The crystallizer **51** is shown in greater detail in FIG. 2, which is a longitudinal view shown partly in section (rods **15** and valve system **16A** are shown in perspective). The main body of the crystallizer is made from an outer shell **1**, a tube sheet **2** on the feed or product inlet side, a tube sheet **3** on the slurry discharge side, and a plurality of tubes **4** disposed inside the shell **1** and having ends supported by the tube sheets **2**, **3**. The inner surface of the tubes **4** are polished to facilitate ice scraping and slurry flow. An inlet head **8** and outlet head **12** are provided at each distal end of the crystallizer and define, with the tube sheets **2** and **3**, respectively, an inlet chamber having an inlet **A** and outlet chamber having an outlet **B**. The feed stream from the wash column is conducted into inlet **A** and through the tubes **4**, where ice crystals form, and the resulting ice/concentrate slurry is pumped from the crystallizer via outlet **B** in a manner described more fully below. The crystallizer may be supported at the inlet and outlet heads in any manner known in art, such as by conventional Victaulic couplings **13**, as showing in FIG. 2.

The tubes **4** are surrounded by a plurality of baffles **5**, which may support the intermediate portions of the tubes. The series of baffles **5** are mounted within the shell to direct the flow of the separate cooling media in a zig-zag pattern around the tubes **4**, insuring full contact with the exterior of the tubes **4** and making it possible to operate the crystallizer in any position or orientation.

The cooling brine enters the crystallizer via an inlet opening **C** in the shell **1** and flows in a zig-zag direction opposite to the flow through the crystallizer until it exits via outlet **D**. Using a secondary cooling media maintained separately from the feedstream in the crystallizer allows the feed to flow at lower pressure than with designs employing direct injection of pressurized refrigerant into the feed stream to create ice crystals. This permits the use of more closely-bundled tubes, having thinner walls, and thereby promotes more efficient heat transfer and freezing of the feed stream. The baffles **5** promote maximum heat transfer at a very low pressure drop, and insure that, regardless of orientation, the shell will be filled with cooling media that will continue to cool the feed at the same rate as designed.

Insulating layers **6** are provided to prevent freezing outside of the tube sheets **2, 3**. The insulating layers may be formed from any known insulating material, such as silicon rubber. Layers **6** are disposed against the inner sides of the tube sheets **2, 3** at the ends of the tubes **4** and are located between adjacent tubes **4**, and between the shell **1** and the outermost tubes **4**.

The pumping and scraping mechanism employed in the crystallizer will now be described. Positioned axially within each tube **4** is a rod **15**. Each rod **15** is fixed at its end to a reciprocating plate **9**, which is connected on its opposite side to a shaft **10**. Shaft **10** enters the inlet head **8** through a sealed opening **11**, and is connected to a conventional drive motor, piston or other mechanism (not shown) that imparts a back-and-forth or reciprocal motion to the shaft **10**, the plate **9**, and the rods **15**. As will be seen, this single drive mechanism supplies the necessary motion for both simultaneously pumping the concentrate through the tubes and for scraping the ice that forms along the inner surface of the tubes. The inlet head **8** is large enough to permit the plate **9** to reciprocate through its full range of motion. Plate **9** contains holes **14** that permit the feed stream entering the inlet **A** to flow freely through the plate.

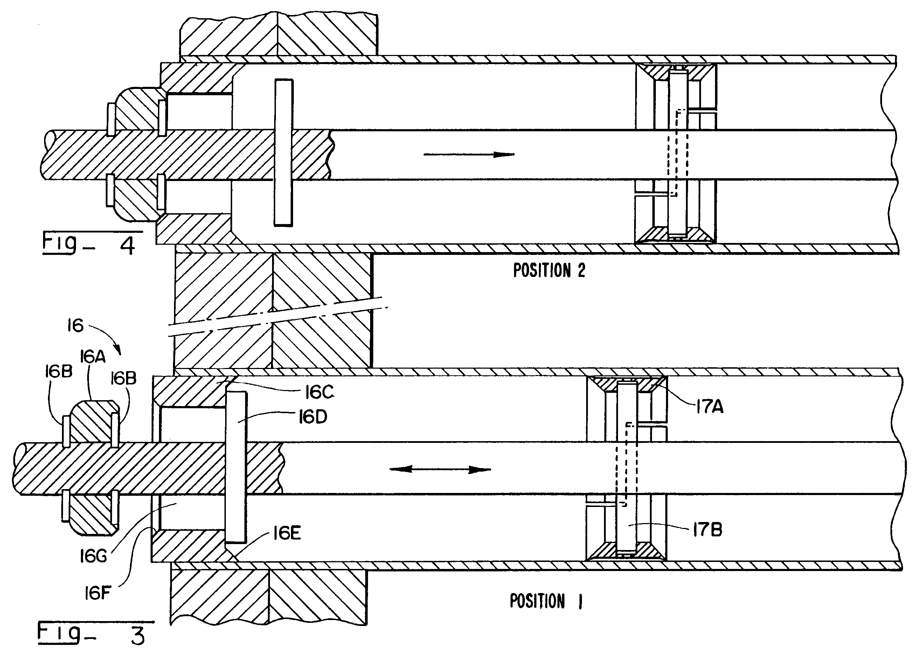

A series of scraper mechanisms **17** are mounted at equally-spaced intervals along the length of the rods **15**, which extend the full length of the tubes. The scraper mechanisms **17** are illustrated in more detail in FIGS. 3-6 and FIG. 3A, which more clearly show the structure of the scrapers. Each scraper includes a driving pin **17B** disposed perpendicular to the rod **15**, and an annular scraper ring **17A** with an annular groove **17E** receiving the driving pin **17B**. The driving pin may be connected to the rod in any suitable fashion such as being inserted through a hole bored in the rod. The scraper ring, which may be constructed as a piston ring, is preferably made of a low-friction, plastic material, with enough elastic memory to continue a produce a force against the inside diameter of tube **4**. Ring **17A** has scraping edges **17C** on both sides of the ring. As shown best in FIG. 3A, between edges **17C** is an undercut, middle portion **17D**, which is spaced from the inner surface **4A** of the tube **4** to reduce friction therebetween. The undercut portion **17D** of the scraper forms an annular chamber **17G** with the inner surface **4A** of the tube and the edges **17C**. A series of small holes **17F** are provided around the circumference of the middle portion **17D**, which communicate the chamber **17G** with the annular groove **17E**. In this manner, any ice crystals flowing past the edges **17C** into chamber **17G** may be conducted via holes **17F** and annular groove **17E** to rejoin the main slurry flow conducted through the open center of the scraper ring **17A**. The annular groove **17E** is stepped to retain pin **17B** with a small clearance between the distal ends of pin **17B** and the outside of groove **17E**, leaves ring **17A** to rotate freely, and since more than 2 holes **17F** are provided in each ring **17A** the flow of ice crystals will not be impeded.

The scraper rings **17A** should fit snugly within the tubes, so that the scraping edges **17C** of the rings are maintained in contact with the tube. This may be accomplished by an interference fit in which the scraping rings are split-type piston rings, by groove **17H**, that are assembled to the rod prior to insertion into tube **4**, thereby ensuring that the rings are biased against the inner surface of the tube for complete ice removal. The scraper mechanisms are spaced along the rod so that the area scraped by one scraper ring at the end of each reciprocal stroke overlaps with the area scraped by the adjacent scraper ring by an amount equal to at least one-half the width of the rings. In this way the entire inner surface of the tube **4** will be scraped completely on each stroke of the rod, with only a small loss of driving energy. The actual length and number of scrapers are conventional design considerations to be determined for each product application. The driving pins may be orientated at different angles along equally-spaced diameters of the tube **4**, as illustrated best in the sectional view of FIG. 2A, to promote even slurry flow. For purposes of clarity only, FIG. 2 shows a perspective view of the pins **17B** in which the ends of the pins are not illustrated as being retained within grooves **17E**; however, it is understood from FIGS. 2A, 3-6, and 3A that each pin is retained in a groove of a corresponding scraper ring.

Also mounted to each rod at the forward end is a pump **16**. The same reciprocal motion of the rod that drives the scrapers also generates the pressure to pump the concentrate and ice slurry through the tubes and eventually through the slurry discharge head **12**. The structure and operation of the pump can be seen in greater detail with reference to FIGS. 3-6. Each pump includes a valve plug **16A** fixedly mounted to the rod **15** between two retaining rings **16B**. A driving pin **16D** is mounted to the rod **15** a short distance from the plug. Between the valve plug **16A** and the pin **16D** is located an annular, floating valve seat **16C**. The floating valve seat **16C** is similar in structure to the scraper rings **17A**, but the floating seat is not fixedly mounted to the rod **15** by a pin or other means; it is connected via a lost-motion connection described below. Seat **16C** is not a piston ring but a close fitted ring with a scraper edge; there will be very little or no ice to be scraped at this early location in the tube **4**.

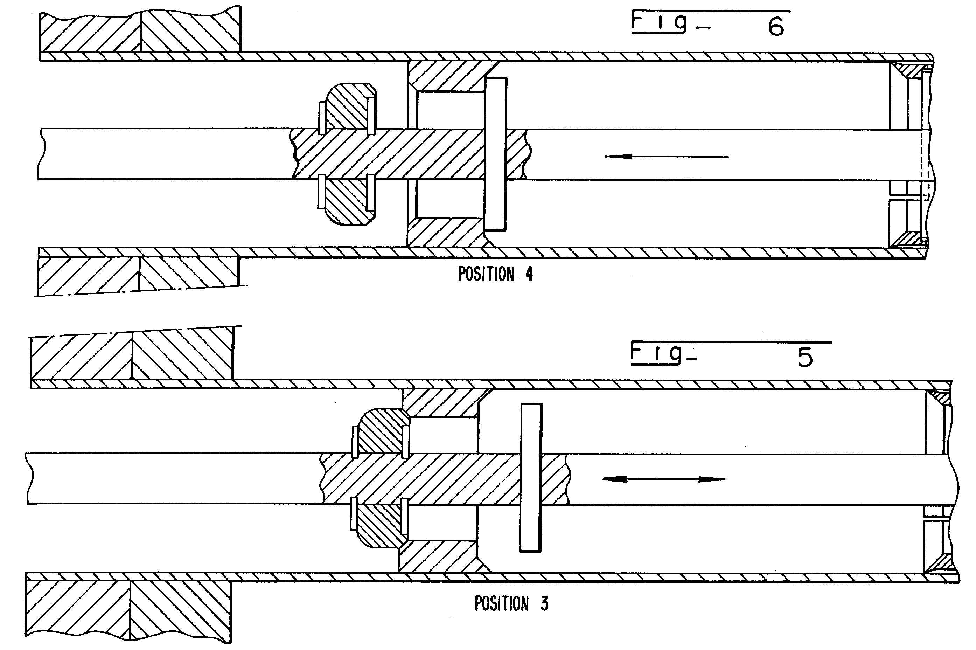

The inner side of the floating valve seat **16C** has a scraper edge **16E** to scrape ice from the inner surface of the tube in a manner similar to the fixedly mounted scraper rings. The outer side of the floating valve seat **16C** is formed with a valving surface **16F** communicating with the central opening **16G** in the seat **16C**. During the forward stroke, the rod, valve plug **16A**, and pin **16D** move relative to the floating seat **16C** a short distance before the plug **16A** abuts against and carries the floating seat **16C** forward into the tube. (FIGS. 3-4). On the reverse stroke, the rod, pin **16D**, and plug **16A** move relative to the seat **16C** a short distance before the pin **16D** abuts against and carries the floating seat **16C** backward out to the forward end of the tube. (FIGS. 5-6). As seen best in FIG. 4, on the forward stroke, the plug **16A** fits snugly against the valving surface **16F**, thereby forming a tight seal closing the central opening **16G** to permit pressurization of the slurry by continued forward movement of the pump **16**. On the reverse stroke, as seen best in FIG. 6, the valve plug is spaced apart from the floating seat and pin **16D** carries the floating seat back to its original position (see FIG. 3), thereby allowing the slurry to flow from the inlet head **8** through the central opening in the floating seat. The lost-motion connection between the valve plug **16A** and the floating valve seat **16C** forms the inlet valve for the pump. The opening **16G** in valve seat **16C** and the distance between valve plug **16A** and valve seat **16C** are designed to be large enough to prevent backflow of the slurry on the reverse stroke. In addition, a check valve shown schematically in Fig. 1 at **51A** is provided in the inlet feed line to the head **8**. The check valve permits the feed to flow freely into the inlet head **8** during the forward stroke of the pump, and prevents the feed from flowing backwards from the head **8** during the reverse stroke. In this way, consistent pumping is achieved by repeated cycles of the pump. Successful pumping of the ice crystal/concentrate slurry has been achieved with a scraping cycle of 5 to 10 seconds. It is known that at lower concentrations ice crystals are firmer and more difficult to remove, so at a low concentration the pumping frequency should be higher than the frequency at a higher concentration.

The feed stream is pumped through the tubes **4** and contacts the inner tube walls in the following manner. Assuming that the inlet head **8** and the wash column are large enough to fill the crystallizer with feed (if not the crystallizer must be primed), the position of the pumps **16** and scrapers **17** are as shown in position 1 of FIG. 3. After starting the reciprocating drive, the next position will be as shown in position **2** of FIG. 4 after which the liquid feed inside tubes **4** is forced through the tubes **4** since the inlet valve of the pump **16** is closed. The pressure in the inlet head **8** will diminish forcing the check valve **51A** in the feed line to open and allow more ice-free feed to enter. This condition will continue until as shown in position 3 of FIG. 5, which is the end of the forward stroke and the beginning of the backward stroke. The first step in the backward stroke is shown in position 4 of FIG. 6 in which the inlet valve of the pump **16** is now open and the check valve **51A** in the feed line closed. There will be no flow until position **1** has been reached and the cycle can repeat.

The flow created by the pumps **16** will exit the crystallizer through outlet **B** in head **12** as a mixture or slurry of ice crystals and a more concentrated liquid. As mentioned above, the cooled brine flow enters port **C** and flows counter-current to the feed through the shell as directed by the baffles **5** before the brine exits through port **D**. The tube walls, preferably constructed of a material with good heat-transfer capabilities such as metal, are cooled from the outside by the counter-current flow of chilled cooling brine. The heat transfer from the feed stream results in ice forming on the inner tube walls. The scraping and pumping mechanism drives the ice mixture forward until it reaches the outlet or discharge head **12**, which may have a dish-like shape to minimize dead corners to prevent ice build-up.

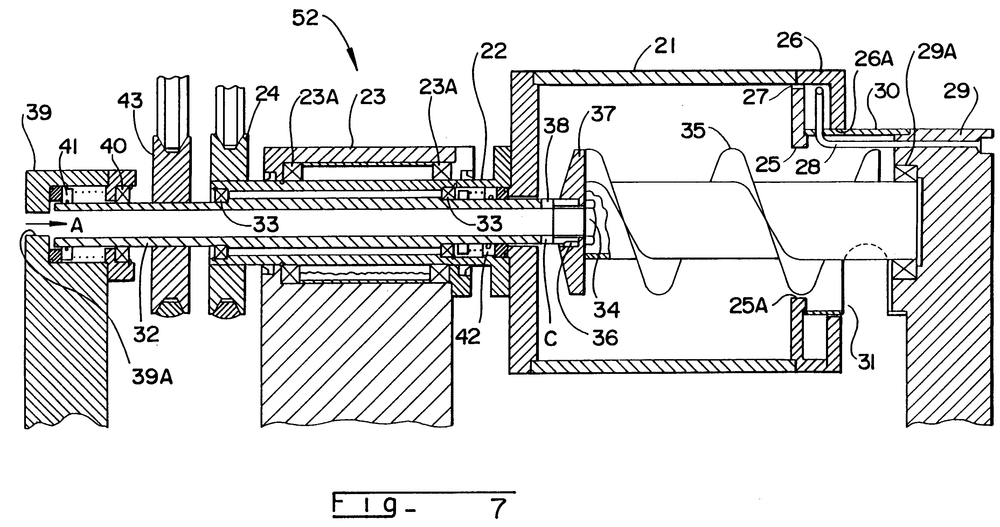

The slurry of ice crystals and concentrate from the crystallizer is conducted to separator **52** where the ice crystals are separated from the concentrate. The separator of the invention can provide at least about 95% or more separation based upon centrifugal action without the use of screens or filters. The separator construction, shown in greater detail in FIG. 7, includes a rotatable drum **21**, which may have an approximate length-to-diameter ratio of 1:1. The drum **21** is connected to one end of a hollow drive shaft **22** supported by a dual bearings **23A** provided in an oil-lubricated pillow block **23**, and is driven by a pulley **24** connected to the other end of shaft **22**. A second drum **26** is sealingly mounted adjacent to the rotatable drum **21** on the opposite side of the hollow drive shaft **22** for rotation with drum **21**. The second drum **26** may have a length-to-diameter ratio of approximately 1:10. The inside diameter of the two drums should be equal. The interiors of drums **21 a**nd **26** are separated by a wall **25**, which extends radially inward from drum **26**. Wall **25** is perforated by a series of small holes **27** in its outer periphery that allow concentrate to flow from the interior of rotatable drum **21** into the interior of the second drum **26**. The wall **25** has a central opening **25A**, which may have a diameter equal to about one-half of the diameter of drum **21**, to accommodate a rotatable auger **35** mounted to a second hollow drive shaft **32**.

Shaft **32** is mounted inside the hollow drive shaft **22** and is supported by two spaced bearings **33** mounted between shafts **22** and **32**. Shaft **32** extends into the rotatable drum **21** via an opening in the drum and is fixedly mounted to a supporting plate **37**. Auger **35** is mounted to the opposite side of plate **37** for rotation therewith. A bolt **34** seals the end of shaft **32** and also connects the plate **37** and auger **35** to the shaft via a key **36**. At the inner end of the bolt **34** a series of holes **38** are provided in shaft **32** that allow slurry conducted from the crystallizer via inlet port A in shaft **32** to enter the drum **21** through the holes **38**. The plate **37** on which one end of the auger **35** is mounted acts as a deflector plate, forcing the slurry entering through shaft **32** and holes **38** to be deflected to the outside of drum **21**. A stationary block **29** has bearings **29A** for supporting the other end of the auger. The entire separator unit **52** may be mounted to a base plate by its three stationary items, block **29**, block **39** and pillow block **23**.

The outer end of shaft **32** is connected to a second pulley **43**, which drives shaft **32** and auger **35**. Shaft **32** extends outwardly to another stationary block **39** having a bearing **40** supporting the shaft for rotation and a mechanical seal **41** for preventing slurry from leaking. The block **39** has an opening **39A**, which is connected by piping or other suitable means to allow slurry to enter the device via inlet port **A**. Another mechanical seal **42** is installed on the outside of drum **21** between shaft **22** and shaft **32** to prevent backflow of slurry from drum **21** from entering the space between the shafts, thereby protecting the bearings **33**. Both shafts may be driven with a single motor (not shown) mounted on top of pillow block **23** with a tension device for driving both pulleys **24** and **43**, which may be of different size to provide different rotational speeds for the drum and auger. Any drive mechanisms capable of producing differential rotational speeds may be employed. For instance, the pulleys **24** and **43** could be connected to a conventional gearbox to facilitate adjusting the speeds of rotation of the two shafts.

When the motor is engaged, both shaft **22** and **32** will rotate, in turn driving the rotating drum **21** and the auger **35**. The two shafts will rotate at different speeds, thereby providing for a scraping motion by the auger **35**. The slurry of ice crystals and concentrate from crystallizer **52** (or another source of ice crystals/concentrate) is conducted via inlet port **A**, hollow shaft **32**, and holes **38** to the rotatable drum **21**. The openings in port **A** and shaft **32** are designed to prevent the ice crystals from separating from the concentrate until after the slurry is conducted through holes **38**. The deflector plate **37** and the "G" forces generated from the rotating drum **21** direct the slurry toward the outside of the drum. The ice crystals are considerably less dense than the concentrate. The density of ice is lower than the density of water. Ice is 8.5 percent less dense than water; the density difference between ice and a concentrate of dissolved or suspended solids is even greater. As a result, when subjected to the rotation of the drum, a centrifugal effect is achieved and the slurry separates according to relative density of its components. The drum must rotate at a high enough rate to generate sufficient G-forces on the slurry to effect this separation. At present, it has been found that 500 to 1,000 G-forces are required to generate adequate separation of ice from concentrate, although the exact rotation requirement varies depending on the feed stream being treated, the percentage of crystallized ice in the slurry, and the viscosity of the concentrate. At these levels, the ice crystals separate from the concentrate and form a layer of ice crystals on the inside of an outer layer of liquid concentrate. As more slurry is added to the rotating drum **21**, both the layer of concentrate and the layer of ice crystals grow inwardly until the ice crystals reach the edge of the auger **35**. If the auger **35** is rotating at a different speed than the drum **21**, the auger will begin scraping the ice crystals and removing them from the drum, as discussed below. The speed of rotation of the auger **35** will depend on the size difference between pulley **24** and pulley **43**. The optimum speed of the auger **35** relative to the speed of the drum **21** depends on the material to be processed and may have to be adjusted for each application.

The outer layer of concentrate is directed through the series of small holes **27** and into the second drum **26**. A stationary tube **28** is located inside drum **26**, preferably positioned so that its opening is closely adjacent the inner surface of the drum and faces opposite the direction of drum rotation. The tube is connected to a fitting in the stationary block **29** that allows the tube **28** to be connected to the piping in the system for removing the ice-free concentrate. The concentrate is removed by pumping through tube **28** without exposure to air, avoiding the foaming problem discussed above. The concentrate removed from the separator **52** via tube **28** may be removed from the system or directed back into the crystallizer if it is desired to increase the concentration of the concentrate. Tests using a sugar solution of 50% by weight have shown that the separator of the invention, which solely employs density-based separation without the use of screens or filters, can achieve approximately 95% or higher removal of concentrate from ice crystals. In fluids in which the viscosity of the concentrate is lower than the sugar concentrate, the ice/concentrate separation could be as high as 98%.

The ice crystals scraped by the auger **35** are removed from the separator via an opening **26A** in the end of the drum **26**, which is sealed by a tube **30** fixedly attached to block **29** to prevent substances from entering the drum **26**. The tube **30** may seal the opening **26A** via a close fit as shown or a set of seals such as Teflon lip-seals may be employed (not shown). Tube **30** has a diameter slightly larger than the diameter of the auger **35** and an outlet opening **31** in the tube **30** is disposed outside the drum **26** through which the ice crystals exit. Thus, as auger **35** continues to operate, ice crystals and any remaining concentrate clinging to the ice crystals (preferably only 5% or less) exit the separator. The ice crystals may be conducted by a conventional auger or other suitable means along line **53** to the wash column for further washing and purification, as shown in FIG. 1.

The high removal rate of concentrate achieved by the separator of the invention greatly reduces the amount of concentrate entering the wash column with the ice crystals, which results in a liquid of lower overall concentration in the wash column. This promotes enhanced ice crystal growth in the wash column and more efficient overall separation as illustrated in the following example. Assuming that at a 40% ice fraction slurry is produced by the ice crystallizer and 95% of the concentrate is removed from the ice by the separator, only 5% of the concentrate will enter the wash column, which is 3% of the total flow. This is mixed with the incoming feed stream of 10% by weight, resulting in an overall concentration of the wash column of 11.5%. Without the ice separator, the full flow from the crystallizer will enter the wash column resulting in a 40% overall concentration of the wash column. Since a wash column is also a gradient device, with concentrated fluid on one side and water on the other side, the wash column used in the system of the invention has a great advantage over the same wash column used without the separator of the invention. Wash columns of this kind have shown good results up to 25% to 30% concentration, but do not operate reliably at concentrations higher than 30%. As shown above, the concentration in the wash column will never get close to the critical concentration when used with the ice separator of the invention.

The ice crystals conducted to the wash column **50** also act to cool the incoming feed stream as it passes over the ice crystals. The crystals then exit the wash column through line **66**, are converted to water at heat exchanger **54**, and the purified water exits the system at **67**.

## Claims

1. A method of separating a liquid feed stream into a concentrate of the liquid and a more purified form using an apparatus including a freeze crystallizer, a first conduit, a separator, and a second conduit from the crystallizer to the separator, characterised in that said method includes the steps of:
(a) directing a liquid feed stream into a wash column;
(b) conducting the feed stream via the first conduit from the wash column to the freeze crystallizer such that the feed stream passes through the crystallizer in a single pass;
(c) creating crystals from the feed stream on an interior surface of the crystallizer;
(d) simultaneously removing the crystals from the interior surface of the crystallizer, combining the crystals with the feed stream in the crystallizer to produce a slurry of crystals and more concentrated liquid, and pumping the slurry out of the crystallizer;
(e) conducting the slurry via the second conduit from the crystallizer to the separator such that the slurry passes through the separator in a single pass; and
(f) separating the crystals and concentrated liquid from the slurry in the separator using a density-based separation method.

2. A method as claimed in claim 1, further comprising the step of directly removing the concentrated liquid from the separator without filtration and without exposing the slurry to air.

3. A method as claimed in claim 1, further comprising the step of conducting the crystals and any residual concentrated liquid from the separator into the wash column.

4. A method as claimed in claim 1, further comprising the step of conducting at least a portion of the concentrated liquid from the separator into the freeze crystallizer to increase the concentration of the liquid.

5. A method as claimed in claim 1, characterised in that the steps are performed on a sea-faring vessel whose orientation may change due to an uneven sea surface.

6. A method as claimed in claim 1, characterised in that the liquid feed stream is an aqueous feed stream.

7. A method as claimed in claim 6, characterised in that the crystals are ice crystals.

8. An apparatus for separating a liquid feed stream into a concentrate of the liquid and a more purified form, the apparatus including a freeze crystallizer for receiving a liquid feed stream and producing a slurry of crystals and a more concentrated liquid, a separator for receiving the slurry from the crystallizer and separating the crystals and concentrate based solely on centrifugal action, the liquid feed stream being conducted via a first conduit to a wash column and from the wash column to freeze crystallizer via a second conduit, the apparatus characterised in that the crystallizer has an interior surface upon which crystals form, a scraper mechanism removing the crystals from the interior surface and combining it with the feed stream to produce the slurry, and a pump for conducting the slurry out of the crystallizer and a single drive mechanism for mechanically driving both the scraper mechanism and the pump.

9. An apparatus as claimed in claim 8, characterised in that the freeze crystallizer further comprises:
at least one tube for receiving the liquid feed stream, said at least one tube having an outer surface and an inner surface upon which crystals form;
means for circulating a cooling medium around the outer surface of said at least one tube for indirectly cooling the liquid feed stream contained therein; and
wherein said scraper mechanism comprises at least one scraper positioned within said at least one tube for scraping crystals from the inner surface of said tube.

10. An apparatus as claimed in claim 8, characterised in that the separator comprises:
a rotatable drum having a longitudinal axis and an inlet (A) for receiving the slurry of crystals and liquid concentrate, a first outlet for conducting concentrate away from the drum, and a second outlet for conducting crystals and any residual liquid concentrate away from the drum;
a scraper disposed inside the drum for conducting the crystals and any residual liquid concentrate to the second outlet; and
means for rotating the drum about its longitudinal axis wherein the centrifugal action produced upon rotation of the drum forces the liquid concentrate radially outward toward the first outlet.

11. An apparatus as claimed in claim 10, characterised in that the scraper comprises a rotatable auger and means for rotating the auger such that the auger and the drum may be rotated at different speeds.

12. An apparatus as claimed in claim 8, wherein the liquid feed stream is an aqueous feed stream.

13. An apparatus as claimed in claim 12, characterised in that the crystals are ice crystals.

## Patentansprüche

1. Verfahren zum Trennen eines Flüssigkeitszustroms in ein Konzentrat der Flüssigkeit und eine mehr gereinigte Form, mit einer Vorrichtung, die einen Gefrier-Kristallisator, eine erste Leitung, einen Separator und eine zweite Leitung von dem Kristallisator zu dem Separator aufweist, dadurch **gekennzeichnet**, daß das Verfahren die folgenden Schritte umfaßt:
(a) Einleiten eines Flüssigkeitszustroms in eine Waschsäule;
(b) Leiten des Zustroms über die erste Leitung aus der Waschsäule zu dem Gefrierkristallisator derart, daß der Zustrom in einem einzigen Durchlauf durch den Kristallisator läuft;
(c) Bilden von Kristallen aus dem Zustrom an einer Innenfläche des Kristallisators;
(d) Gleichzeitiges Entfernen der Kristalle von der Innenfläche des Kristallisators, wobei die Kristalle mit dem Zustrom in dem Kristallisator kombiniert werden, um eine Suspension von Kristallen und stärker konzentrierter Flüssigkeit zu bilden, und Herauspumpen der Suspension aus dem Kristallisator;
(e) Leiten der Suspension über die zweite Leitung von dem Kristallisator zu dem Separator derart, daß die Suspension in einem einzigen Durchlauf durch den Separator läuft und
(f) Trennen der Kristalle und der konzentrierten Flüssigkeit aus der Suspension in dem Separator mit einem auf der Dichte beruhenden Trennverfahren.

2. Verfahren nach Anspruch 1, mit dem weiteren Schritt der direkten Entfernung der konzentrierten Flüssigkeit aus dem Separator ohne Filtration und ohne Inkontaktbringen der Suspension mit Luft.

3. Verfahren nach Anspruch 1, mit dem weiteren Schritt des Leitens der Kristalle und etwaiger konzentrierter Restflüssigkeit aus dem Separator in die Waschsäule.

4. Verfahren nach Anspruch 1, mit dem weiteren Schritt des Leitens mindestens eines Teils der konzentrierten Flüssigkeit von dem Separator in den Gefrierkristallisator zum Erhöhen der Konzentration der Flüssigkeit.

5. Verfahren nach Anspruch 1, dadurch **gekennzeichnet**, daß die Schritte auf einem auf See befindlichen Schiff durchgeführt werden, dessen Orientierung sich durch unebene Meeresoberfläche ändern kann.

6. Verfahren nach Anspruch 1, dadurch **gekennzeichnet**, daß der Flüssigkeitszustrom ein wässriger Zustrom ist.

7. Verfahren nach Anspruch 6, dadurch **gekennzeichnet**, daß die Kristalle Eiskristalle sind.

8. Verfahren zum Trennen eines flüssigen Zustroms in ein Konzentrat der Flüssigkeit und eine mehr gereinigte Form, wobei die Vorrichtung einen Gefrierkristallisator zum Empfang eines Flüssigkeitszustroms und zur Erzeugung einer Suspension von Kristallen und einer mehr konzentrierten Flüssigkeit, einen Separator zum Empfang der Suspension von dem Kristallisator und zum Trennen der Kristalle und des Konzentrats ausschließlich durch Zentrifikalwirkung umfaßt, wobei der Flüssigkeitsstrom über eine erste Leitung zu einer Waschsäule und über eine zweite Leitung von der Waschsäule zu dem Gefrierkristallisator geleitet wird, dadurch **gekennzeichnet**, daß der Kristallisator eine innere Oberfläche, auf der sich Kristalle bilden, einen Schabmechanismus zum Entfernen der Kristalle von der inneren Oberfläche und zu ihrem Kombinieren mit dem Zustrom zur Erzeugung der Suspension, und eine Pumpe zum Herausfördern der Suspension aus dem Kristallisator, sowie einen einzigen Antriebsmechanismus zum mechanischen Antrieb sowohl des Schabmechanismus als auch der Pumpe aufweist.

9. Vorrichtung nach Anspruch 8, dadurch **gekennzeichnet**, daß der Gefrierkristallisator ferner umfaßt:
mindestens ein Rohr zum Empfang des Flüssigkeitszustroms, wobei das mindestens eine Rohr eine Außenfläche und eine Innenfläche, auf der sich Kristalle bilden, aufweist;
Mittel zum Zirkulieren eines Kühlmediums um die Außenfläche des mindestens einen Rohres zum indirekten Kühlen des darin aufgenommenen Flüssigkeitszustroms; und
wobei der Schabmechanismus mindestens einen Schaber umfaßt, der in dem mindestens einen Rohr angeordnet ist, um Kristalle von der Innenfläche des Rohres abzuschaben.

10. Verfahren nach Anspruch 8, dadurch **gekennzeichnet**, daß der Separator umfaßt:
eine drehbare Trommel mit einer Längsachse und einem Einlaß (A) zum Empfang der Suspension von Kristallen und Flüssigkeitskonzentrat, einen ersten Auslaß zum Wegleiten von Konzentrat von der Trommel, und einen zweiten Auslaß zum Wegleiten von Kristallen und etwaigem restlichem Flüssigkeitskonzentrat von der Trommel;
einen innerhalb der Trommel angeordneten Schaber zum Führen der Kristalle und etwaigen restlichen Flüssigkeitskonzentrats zu dem zweiten Auslaß; und
Mittel zum Drehen der Trommel um ihre Längsachse, wobei die bei Drehung der Trommel erzeugte Zentrifugalwirkung das Flüssigkeitskonzentrat radial nach außen zu dem ersten Auslaß drückt.

11. Vorrichtung nach Anspruch 10, dadurch **gekennzeichnet**, daß der Schaber eine drehbare Schnecke und Mittel zum Drehen der Schnecke umfaßt derart, daß die Schnecke und die Trommel mit unterschiedlichen Drehzahlen gedreht werden können.

12. Vorrichtung nach Anspruch 8, bei dem der Flüssigkeitszustrom ein wässriger Zustrom ist.

13. Vorrichtung nach Anspruch 12, dadurch **gekennzeichnet**, daß die Kristalle Eiskristalle sind.

## Revendications

1. Procédé pour séparer un courant liquide d'alimentation en un concentré du liquide et une forme plus purifiée en utilisant un appareil comprenant un dispositif de cristallisation par congélation, un premier conduit, un séparateur et un second conduit allant du dispositif de cristallisation au séparateur, caractérisé en ce que ledit procédé comprend les étapes consistant :
(a) à diriger un courant liquide d'alimentation dans une colonne de lavage ;
(b) à conduire le courant d'alimentation par le premier conduit de la colonne de lavage au dispositif de cristallisation par congélation de telle sorte que le courant d'alimentation passe à travers le dispositif de cristallisation en une seule passe ;
(c) à former des cristaux à partir du courant d'alimentation sur une surface intérieure du dispositif de cristallisation ;
(d) simultanément, à séparer les cristaux de la surface intérieure du dispositif de cristallisation, à associer les cristaux au courant d'alimentation dans le dispositif de cristallisation pour produire une suspension de cristaux et un liquide plus concentré, et à évacuer par pompage la suspension hors du dispositif de cristallisation ;
(e) à conduire la suspension par le second conduit du dispositif de cristallisation au séparateur de telle sorte que la suspension passe à travers le séparateur en une seule passe ; et
(f) à séparer les cristaux et le liquide concentré de la suspension dans le séparateur en utilisant un procédé de séparation basé sur la densité.

2. Procédé suivant la revendication 1, comprenant en outre l'étape consistant à évacuer directement le liquide concentré du séparateur sans filtration et sans exposer la suspension à l'air.

3. Procédé suivant la revendication 1, comprenant en outre l'étape consistant à conduire les cristaux et tout liquide concentré résiduel du séparateur à la colonne de lavage.

4. Procédé suivant la revendication 1, comprenant en outre l'étape consistant à conduire au moins une partie du liquide concentré du séparateur au dispositif de cristallisation par congélation pour accroître la concentration du liquide.

5. Procédé suivant la revendication 1, caractérisé en ce que les étapes sont mises en oeuvre sur un bâtiment de transport par mer dont l'orientation peut varier en raison d'une irrégularité de surface de la mer.

6. Procédé suivant la revendication 1, caractérisé en ce que le courant liquide d'alimentation est un courant aqueux d'alimentation.

7. Procédé suivant la revendication 6, caractérisé en ce que les cristaux sont des cristaux de glace.

8. Appareil pour séparer un courant liquide d'alimentation en un concentré du liquide et une forme plus purifiée, ledit appareil comprenant un dispositif de cristallisation par congélation pour recevoir un courant liquide d'alimentation et produire une suspension de cristaux et un liquide plus concentré, un séparateur pour recevoir la suspension provenant du dispositif de cristallisation et séparer les cristaux et le concentré sur la base seulement de l'action centrifuge, le courant liquide d'alimentation étant envoyé par un premier conduit à une colonne de lavage et, de la colonne de lavage au dispositif de cristallisation par congélation par un second conduit, l'appareil étant caractérisé en ce que le dispositif de cristallisation comporte une surface intérieure sur laquelle se forment des cristaux, un mécanisme de raclage séparant les cristaux de la surface intérieure et les associant au courant d'alimentation pour produire la suspension, et une pompe pour conduire la suspension hors du dispositif de cristallisation et un mécanisme de commande unique pour commander mécaniquement à la fois le mécanisme de raclage et la pompe.

9. Appareil suivant la revendication 8, caractérisé en ce que le dispositif de cristallisation par congélation comprend en outre :
au moins un tube pour recevoir le courant liquide d'alimentation, ledit au moins un tube ayant une surface extérieure et une surface intérieure sur laquelle se forment des cristaux ;
des moyens pour faire circuler un milieu de refroidissement autour de la surface extérieure dudit au moins un tube pour refroidir indirectement le courant liquide d'alimentation qui s'y trouve ; et
ledit mécanisme de raclage comprenant au moins un racleur positionné à l'intérieur dudit au moins un tube pour séparer par raclage les cristaux de la surface intérieure dudit tube.

10. Appareil suivant la revendication 8, caractérisé en ce que le séparateur comprend :
un tambour rotatif ayant un axe longitudinal et un orifice d'admission (A) pour recevoir la suspension de cristaux et le concentré liquide, un premier orifice de sortie pour conduire le concentré hors du tambour, et un second orifice de sortie pour conduire les cristaux et tout concentré liquide résiduel hors du tambour ;
un racleur placé à l'intérieur du tambour pour conduire les cristaux et tout concentré liquide résiduel au second orifice de sortie ; et
des moyens pour faire tourner le tambour autour de son axe longitudinal, l'action centrifuge produite par rotation du tambour entraînant le concentré liquide radialement à l'extérieur vers le premier orifice de sortie.

11. Appareil suivant la revendication 10, caractérisé en ce que le racleur comprend une cuiller rotative et des moyens pour la rotation de la cuiller de telle sorte que la cuiller et le tambour puissent être soumis à des rotations à des vitesses différentes.

12. Appareil suivant la revendication 8, dans lequel le courant liquide d'alimentation est un courant aqueux d'alimentation.

13. Appareil suivant la revendication 12, caractérisé en ce que les cristaux sont des cristaux de glace.
